# DEMANDE DE BREVET EUROPEEN

(11) **EP 2 163 960 A1**
(43) Date de publication de la demande: **17.03.2010**
(21) Numéro de dépôt: 08164351.2
(22) Date de dépôt: 15.09.2008
(51) Int. Cl.: G05B 19/404, G05B 19/4093

(54) **Procédé de gestion de données d'ajustement dans un processus d'usinage automatique**

(71) Demandeur: Tornos SA, 2740 Moutier (CH)
(72) Inventeur: Paroz, Cédric, 2732 Saicours (CH)
(74) Mandataire: Scheuzger, Beat Otto

(57) **Abrégé**

La présente invention concerne un procédé de gestion d'ajustements dans le cadre d'un usinage automatique d'une pièce par une machine, comportant une phase de création ou de modification d'un programme pièce consistant à identifier les différentes portées de la pièce et leurs caractéristiques, à choisir des outils pour usiner les portées, à choisir un système d'outils portant lesdits outils, à déterminer les enchaînements et les trajectoires nécessaires pour obtenir les caractéristiques attendues et à traduire l'ensemble de ces données en un programme pièce, une phase de mise en train consistant à mettre en place les outils et la matière et à ajuster des paramètres pour réaliser la pièce avec les caractéristiques attendues,
caractérisé en ce qui consiste à faire correspondre les paramètres ajustables avec les caractéristiques spécifiées dans la spécification de la pièce, à convertir automatiquement les ajustements en instructions du programme pièce et à prendre en compte automatiquement lesdites instructions par la commande de la machine.

L'invention concerne également une commande de machine mettant en oeuvre ce procédé, ainsi qu'à une machine équipée d'une telle commande.

## Description

### Domaine technique de l'invention

La présente invention se rapporte au domaine technique général des procédés d'usinage par enlèvement de copeaux. Ces procédés fonctionnent sur le principe d'exécution répétitive d'un programme pièce pré-établi.

Dans de tels procédés, les caractéristiques des pièces, en particulier des dimensions des pièces produites peuvent varier dans le temps pour diverses raisons, par exemple de dérives thermiques, d'usures ou d'autres paramètres.

L'utilisateur peut alors être amené à faire des ajustements de certains paramètres du programme pièce pré-établi, dans le but d'améliorer la qualité des pièces. De tels ajustements se font usuellement d'une part lors de la mise au point des procédés pour chaque programme et d'autre part également au cours de la production. Cette mise au point est appelée « *mise en train* » par l'homme du métier. On parle alors de « *mise en train de la pièce* » détaillée dans la présente.

Les ajustements dont il est question, ne modifient pas la forme de la pièce et le programme pré-établi reste inchangé. Seuls certains paramètres sont ajustés. Les ajustements ne concernent généralement qu'une partie spécifique de la pièce.

L'utilisateur peut aussi être amené, dans certains cas, à ajuster des paramètres du programme pré-établi pour diverses autres raisons non détaillées ici.

Dans la suite le terme « portée » sera entendu comme une partie usinée d'une pièce. On peut identifier des portées de toute sorte, du genre cylindrique ou conique ou du genre face.

### Description de l'état de la technique

Historiquement, les portées ont été associées à des outils réels. Par la suite, lorsqu'une même arête de coupe usine plusieurs portées différentes, on a utilisé la notion d'outils virtuels dans les programmes pièces. Ainsi, une même arête de coupe usinant deux portées différentes est nommée différemment lorsqu'elle passe d'une portée à l'autre lors de l'usinage.

A chaque portée correspond donc un outil virtuel différent dans le programme pièce. Il s'agit cependant physiquement du même outil et de la même arête de coupe.

L'utilisation de cette notion d'outils virtuels est abstraite et sans correspondance avec la réalité. La nécessité d'ajuster des portées peut alors devenir difficile à gérer pour l'utilisateur, dans la mesure où il faut intervenir sur les différents outils virtuels. De même, la correction et/ou l'ajustement d'une portée nécessite la connaissance de l'outil concerné, ce qui rend cette opération très longue, difficile et complexe.

### Exposé sommaire de l'invention

L'objet de la présente invention vise par conséquent à proposer un nouveau procédé de gestion d'ajustements n'utilisant pas cette notion d'outils virtuels et dont la mise en oeuvre est plus simple et plus proche des préoccupations réelles de l'utilisateur.

Les objets assignés à l'invention sont atteints à l'aide d'un procédé de gestion d'ajustements dans le cadre d'un usinage automatique d'une pièce par une machine, comportant :
- une phase de création ou de modification d'un programme pièce consistant à identifier les différentes portées de la pièce et leurs caractéristiques, à choisir des outils pour usiner les portées, à choisir un système d'outils portant lesdits outils, à déterminer les enchaînements et les trajectoires nécessaires pour obtenir les caractéristiques attendues et à traduire l'ensemble de ces données en un programme pièce,
- une phase de mise en train consistant à mettre en place les outils et la matière et à ajuster des paramètres pour réaliser la pièce avec les caractéristiques attendues,
- une phase de production consistant à réaliser la pièce et prélever des caractéristiques de la pièce,
**caractérisé en ce qui** consiste à faire correspondre les paramètres ajustables avec les caractéristiques spécifiées dans la spécification de la pièce, à convertir automatiquement les ajustements en instructions du programme pièce et à prendre en compte automatiquement lesdites instructions par la commande de la machine.

Les caractéristiques spécifiées sont par exemple des caractéristiques dimensionnelles ou géométriques.

Selon une variante de mise en oeuvre, les caractéristiques spécifiées se rapportent à l'état de surface de la pièce.

Selon un exemple de mise en oeuvre, le procédé conforme à l'invention consiste à utiliser un moyen de représentation graphique pour identifier le lien entre au moins un paramètre ajustable et la caractéristique de la pièce qu'il détermine.

Le moyen de représentation graphique est par exemple un dessin sur lequel sont représentés des codes, lesdits codes permettant de sélectionner un paramètre souhaité sur un organe de commande ou sur un outil de programmation. Ce dessin peut porter des indications correspondant aux spécifications de la pièce.

Selon un exemple de mise en oeuvre, le procédé conforme à l'invention consiste à utiliser d'une part en tant que moyen de représentation graphique, un écran sur lequel est reproduit, au moins en partie, la pièce ainsi que des champs d'édition associés aux caractéristiques de spécification et d'autre part un moyen de sélection d'un organe d'introduction de données pour sélectionner au moins un champ d'édition.

Selon un exemple de mise en oeuvre, le procédé conforme à l'invention consiste à mettre en évidence de façon automatique lors de la sélection d'un champ, de tous les champs concernés par le même outil ou la même partie d'outil que l'outil sélectionné ou la partie d'outil sélectionnée.

Selon un exemple de mise en oeuvre, le procédé conforme à l'invention consiste à afficher un champ d'édition supplémentaire pour l'introduction d'un ajustement concernant l'ensemble des caractéristiques de l'outil ou d'une partie d'outil.

Selon un exemple de mise en oeuvre, le procédé conforme à l'invention consiste à choisir les caractéristiques ajustables lors de la phase de création ou de modification du programme pièce.

Selon un exemple de mise en oeuvre, le procédé conforme à l'invention consiste à proposer par défaut un choix de paramètres et de caractéristiques ajustables.

Selon un exemple de mise en oeuvre, le procédé conforme à l'invention consiste à utiliser un matériel séparable de la machine pour mettre en oeuvre les phases de création ou de modification du programme pièce.

Selon un exemple de mise en oeuvre, le procédé conforme à l'invention consiste à calculer d'avance au moins partiellement le programme pièce, sous forme de tables ou de positions prenant en compte les informations sur les caractéristiques requises pour la pièce et les informations sur les caractéristiques dynamiques de la machine, de ses motorisations et de sa commande.

Selon un exemple de mise en oeuvre, le procédé conforme à l'invention consiste à introduire les ajustements sous forme de valeur mesurée, sous forme de différence constatée ou sous forme de valeur de modification souhaitée.

A cet endroit, il faut mentionner que la présente invention se rapporte non seulement au procédé de gestion d'ajustements dans le cadre d'un usinage automatique d'une pièce par une machine tel qu'expliqué plus haut, mais également à une commande de machine mettant en oeuvre le procédé conforme à l'invention, ainsi qu'à une machine équipée d'une telle commande.

Dans la suite de la description, il s'agit plus particulièrement d'une pièce fabriquée par tournage, mais l'invention ne se limite pas à ce mode particulier d'usinage. L'ensemble des procédés d'usinage par enlèvement de copeaux est concerné par la présente invention.

### Description brève des dessins

L'invention et ses avantages apparaîtront avec plus de détails, dans le cadre de la description qui suit avec un exemple de réalisation donné à titre illustratif en référence aux figures annexées qui représentent :
- la figure 1, illustre un exemple de pièce en vue de profil, réalisée par tournage et présentant différentes portées parmi lesquelles des portées coniques, cylindriques et des faces.
- la figure 2, illustre quatre exemples d'outils de tournage,
- et la figure 3, illustre la pièce de la figure 1, avec une interface graphique dans le cadre d'un exemple de mise en oeuvre du procédé conforme à l'invention.

### Exposé détaillé de l'invention

Les éléments structurellement et fonctionnellement identiques et présents sur plusieurs figures distinctes, sont affectés d'une seule et même référence.

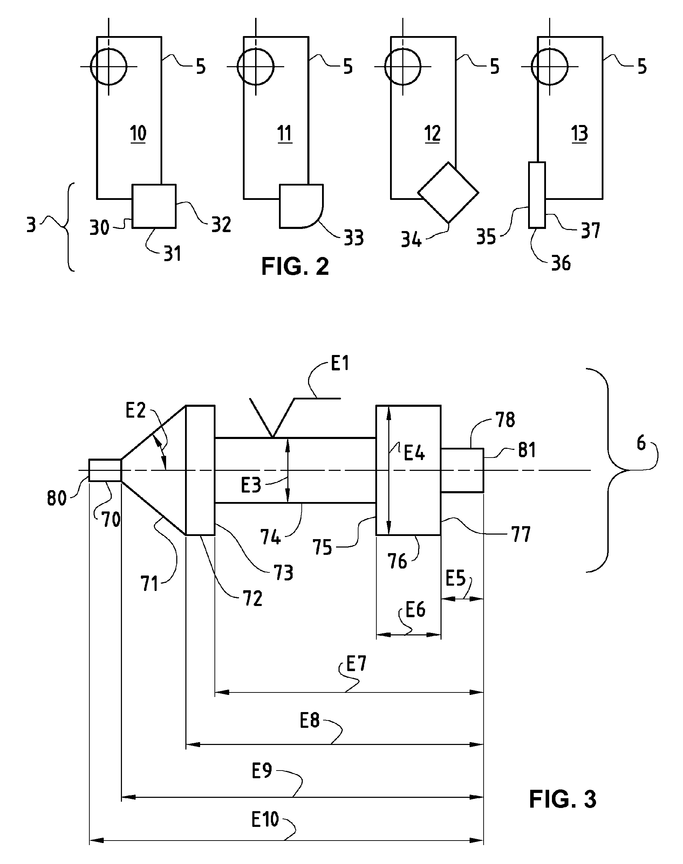

La figure 2 illustre quatre exemples d'outils de tournage 10-13 comportant un corps d'outil 5 et une partie coupante 3 solidaire dudit corps d'outil 5. La partie coupante 3 présente différentes arêtes de coupe 30-37.

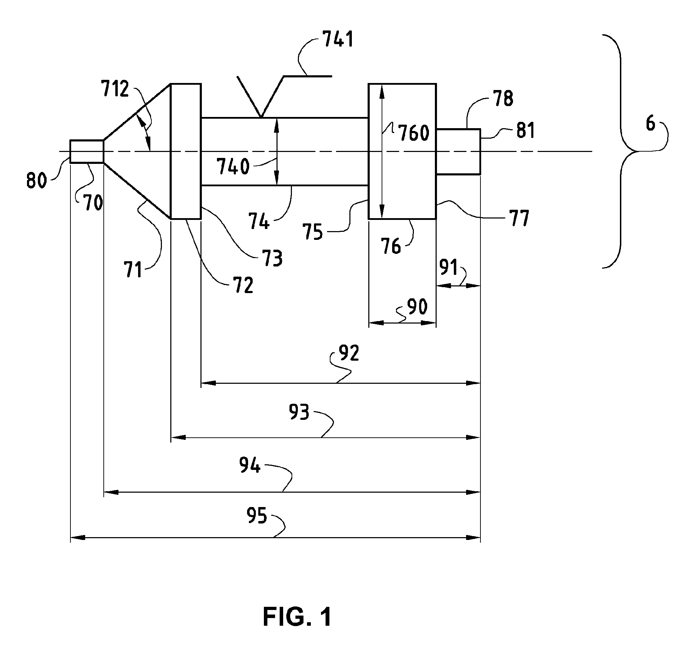

La figure 1 illustre une pièce 6 avec un ensemble de portées 70-78,80 et 81 dont chacune est destinée à être usinée par l'une des arêtes 30-37 prédéterminée dans la phase de création du programme pièce.

Lorsque l'utilisateur souhaite usiner une pièce avec une grande précision, le choix de l'outil adapté à telle ou telle portée, le choix de l'arête de coupe, le nom de l'outil, son emplacement dans la machine, ne l'intéresse que dans la phase de création du programme pièce. En phase de mise en train ou de production, seules les précisions des usinages effectués (c'est-à-dire la qualité de la pièce usinée) présentent un intérêt.

L'utilisateur connaît les caractéristiques de la pièce à atteindre grâce aux spécifications de ladite pièce. La constatation d'une divergence entre la qualité de la pièce produite et mesurée et la qualité attendue de la pièce, lui impose d'effectuer un ou plusieurs ajustements, par exemple en introduisant directement la différence constatée dans un système de commande qui exécute le programme pièce. Le système de commande peut également prendre en compte après une introduction de la part de l'utilisateur, des valeurs réelles mesurées ou des corrections attendues.

Les caractéristiques ajustées peuvent être dimensionnelles, du genre diamètres 740,760, longueurs 91-95, distances 90, angles 712 ou du genre état de surface 741 ou toute autre caractéristique mesurable.

La figure 3 représente un exemple de mise en oeuvre du procédé conforme à l'invention dans lequel un moyen de représentation graphique, du genre écran, présente la pièce 6 avec des champs d'édition E1 à E10, correspondant aux caractéristiques que l'utilisateur doit pouvoir ajuster. Le champ d'édition E2 correspond par exemple à un angle et le champ d'édition E1 correspond par exemple à un état de surface.

Il est notamment envisageable d'utiliser une représentation en trois dimensions de la pièce sur l'écran, même si d'autres représentations sont évidemment possibles. Dans ce contexte, un organe de manipulation (par exemple un joystick, une souris ou un autre organe de manipulation similaire) pour sélectionner une vue souhaitée selon une direction particulière peut être utilisé.

Les champs d'éditions E1 à E10 s'affichent par exemple sous forme de fenêtres dans lesquelles sont inscrits les ajustements.

Le créateur du programme pièce identifie les caractéristiques qui sont sujettes à être ajustées. Il s'agit ici usuellement des caractéristiques qui portent des tolérances sur les spécifications. Le choix des caractéristiques qui sont accessibles à cet effet, effectué lors de la phase de programmation, peut cependant être modifié à tout moment.

Il est important de mentionner à cet endroit-ci que le créateur du programme pièce peut être une personne, mais également un logiciel, comme dans le cadre de la fabrication assistée par ordinateur (FAO). La présente invention n'est donc pas limitée à une mise on oeuvre du procédé requérant des utilisateurs humains dans la phase de création de programme pièce.

Selon un autre mode de mise en oeuvre du procédé conforme à l'invention, les caractéristiques sont identifiées par le programmeur grâce à des codes introduits sur le dessin de la pièce 6. En cas de besoin, l'utilisateur introduit dans un système de commande du genre interface simplifiée homme/machine, le code et l'ajustement souhaités (valeur mesurée, différence constatée ou la correction attendue).

Le moyen de représentation graphique permet selon un autre mode de mise en oeuvre du procédé conforme à l'invention, de mettre en évidence toutes les zones concernées par le même outil ou la même partie d'outil, lors d'une sélection d'un champ d'édition. Cette mise en évidence est obtenue par exemple en changeant la couleur de fond de ces champs affichés.

Le procédé peut également générer un nouveau champ d'édition commun à tous ces champs d'édition dans l'hypothèse où un ajustement concernerait l'ensemble des caractéristiques modifiées par un même outil ou une même partie d'outil.

Il est par exemple envisageable d'introduire les ajustements sous forme de valeur mesurée, sous forme de différence constatée ou sous forme de valeur de modification souhaitée, mais d'autres formes d'ajustement sont également possibles.

Naturellement, la présente invention est sujette à de nombreuses variations quant à sa mise en oeuvre. Bien que plusieurs modes de réalisations ou de mise en oeuvre aient été décrits, on comprend bien qu'il n'est pas concevable d'identifier de manière exhaustive tous les modes possibles. Il est bien sûr envisageable de remplacer un moyen décrit par un moyen équivalent ou une étape décrite par une étape équivalente, sans sortir du cadre de la présente invention.

## Revendications

1. Procédé de gestion d'ajustements dans le cadre d'un usinage automatique d'une pièce par une machine, comportant :
- une phase de création ou de modification d'un programme pièce consistant à identifier les différentes portées de la pièce et leurs caractéristiques, à choisir des outils pour usiner les portées, à choisir un système d'outils portant lesdits outils, à déterminer les enchaînements et les trajectoires nécessaires pour obtenir les caractéristiques attendues et à traduire l'ensemble de ces données en un programme pièce,
- une phase de mise en train consistant à mettre en place les outils et la matière et à ajuster des paramètres pour réaliser la pièce avec les caractéristiques attendues,
- une phase de production consistant à réaliser la pièce et prélever des caractéristiques de la pièce,
**caractérisé en ce qui** consiste à faire correspondre les paramètres ajustables avec les caractéristiques spécifiées dans la spécification de la pièce, à convertir automatiquement les ajustements en instructions du programme pièce et à prendre en compte automatiquement lesdites instructions par la commande de la machine.

2. Procédé selon la revendication 1,
**caractérisé en ce que** les caractéristiques spécifiées sont des caractéristiques dimensionnelles ou géométriques.

3. Procédé selon la revendication 1,
**caractérisé en ce que** les caractéristiques spécifiées se rapportent à l'état de surface de la pièce.

4. Procédé selon l'une quelconque des revendications précédentes,
**caractérisé en ce qui** consiste à utiliser un moyen de représentation graphique pour identifier le lien entre au moins un paramètre ajustable et la caractéristique de la pièce qu'il détermine.

5. Procédé selon la revendication 4,
**caractérisé en ce que** le moyen de représentation graphique est un dessin sur lequel sont représentés de codes, lesdits codes permettant de sélectionner un paramètre souhaité sur un organe de commande ou sur un outil de programmation.

6. Procédé selon la revendication 4,
**caractérisé en ce qui** consiste à utiliser d'une part en tant que moyen de représentation graphique, un écran sur lequel est reproduit au moins en partie la pièce ainsi que des champs d'édition associés aux caractéristiques de spécification et d'autre part un moyen de sélection d'un organe d'introduction de données pour sélectionner au moins un champ d'édition.

7. Procédé selon la revendication 6,
**caractérisé en ce qui** consiste à mettre en évidence de façon automatique lors de la sélection d'un champ, de tous les champs concernés par le même outil ou la même partie d'outil que l'outil sélectionné ou la partie d'outil sélectionnée.

8. Procédé selon la revendication 6 ou 7,
**caractérisé en ce qui** consiste à afficher un champ d'édition supplémentaire pour l'introduction d'un ajustement concernant l'ensemble des caractéristiques de l'outil ou d'une partie d'outil.

9. Procédé selon l'une quelconque des revendications 1 à 8,
**caractérisé en ce qui** consiste à choisir les caractéristiques ajustables lors de la phase de création ou de modification du programme pièce.

10. Procédé selon la revendication 9,
**caractérisé en ce qui** consiste à proposer par défaut un choix de paramètres et de caractéristiques ajustables.

11. Procédé selon l'une quelconque des revendications 1 à 10,
**caractérisé en ce qui** consiste à utiliser un matériel séparable de la machine pour mettre en oeuvre les phases de création ou de modification du programme pièce.

12. Procédé selon l'une quelconque des revendications 1 à 11,
**caractérisé en ce qui** consiste à calculer à l'avance au moins partiellement le programme pièce, sous forme de tables ou de positions prenant en compte les informations sur les caractéristiques requises pour la pièce et les informations sur les caractéristiques dynamiques de la machine, de ses motorisations et de sa commande.

13. Procédé selon l'une quelconque des revendications 1 à 12,
**caractérisé en ce qui** consiste à introduire les ajustements sous forme de valeur mesurée, sous forme de différence constatée ou sous forme de valeur de modification souhaitée.

14. Commande de machine mettant en oeuvre le procédé selon l'une quelconque des revendications 1 à 13.

15. Machine équipée d'une commande selon la revendication 14.
